# EUROPEAN PATENT APPLICATION

(11) **EP 3 068 125 A1**
(43) Date of publication of application: **14.09.2016**
(21) Application number: 15158312.7
(22) Date of filing: 09.03.2015
(51) Int. Cl.: H04N 5/225, H04N 13/02

(54) **A method of manufacturing a multiple view camera system and multiple view camera system**

(71) Applicant: Delphi Technologies, Inc., Troy MI 48007 (US)
(72) Inventor: Zurowski, Miroslaw J., 30-348 Krakow (PL); Duralek, Janusz, 33-380 Krynica Zdroj (PL); Antos, Przemyslaw, 32-050 Skawina (PL)
(74) Representative: Delphi France SAS

(57) **Abstract**

A method of manufacturing a multiple view camera system comprising at least two cameras installed in a housing, the method comprising the steps of: - providing a main housing part and mounting a first camera in the main housing part; - providing a sub-housing part and mounting a second camera in the sub-housing part; - arranging the sub-housing part at the main housing part; - aligning the sub-housing part and the main housing part relative to one another at a predefined tolerance; and - connecting the sub-housing part to the main housing part. The invention also relates to a corresponding multiple view camera system.

## Description

The present invention relates to a method of manufacturing a multiple view camera system and to a multiple view camera system.

Vehicles comprising systems that assist drivers exist in the prior art. For example, one or more cameras can be installed in a vehicle in order to detect whether a moving or stationary object becomes too close to the moving vehicle. If an object is detected as being too close to the moving vehicle, the system initiates an automatic braking routine and/or preloads the brakes such that the brake system is pressurized and when the driver actuates the brakes the vehicles full braking power is then available instantaneously to the driver of the vehicle. These systems are typically mounted in the area of the windshield, in particular behind or in front of the rear view mirror.

In order to ensure the correct operation of the camera having an imager and a lens, the imager and the lens of a camera system always have to be aligned to a very high degree of accuracy. This is because the quality, reliability and reproducibility in the manufacturing of automotive cameras is critical, as their applications are directly linked to the safety of the vehicle's driver. For this purpose alignment methods exist, in which single lens camera systems can be aligned using a so-called 5 axis alignment machine. Such a 5 axis alignment mechanism is capable of aligning a lens relative to the imager at the required degree of accuracy.

However, on installing camera systems comprising a plurality of cameras that may work on a stereo system basis, but are not necessarily stereo systems, in particular the medium range vision part and the long range vision part of the system have to be aligned to a very high degree of accuracy. This is especially the case along the x-axis of such camera systems, where a deviation of less than 0.05° is required such that these systems can ensure that no misinterpretation of objects present at the boundaries of the ranges takes place.

However, such an accuracy of alignment is not possible using current manufacturing techniques. Moreover, the housings of the camera systems are typically of aluminium which means that the bond between the camera system and the housing is not straightforward. Moreover, the alignment of the two different camera lens systems must also remain if the vehicle is subjected to different thermal conditions and also to varying thermal conditions, making the requirements with regard to the bond more complex.

In view of the foregoing it is an object of the present invention to provide a camera system that works over a broader field of view than the systems known in the prior art. It is a further object of the present invention to reliably produce reproducible camera systems of high quality that work reliably for varying temperature ranges and in different situations over the broader field of view.

These objects are satisfied by a method of manufacture a multiple view camera system in accordance with claim 1 and by a multiple view camera system in accordance with claim 6.

The method of manufacture of a multiple view camera system comprising at least two cameras installed in a housing, comprises the steps of:
- providing a main housing part and mounting a first camera in the main housing part;
- providing a sub-housing part and mounting a second camera in the sub-housing part;
- arranging the sub-housing part at the main housing part;
- aligning a component present at the sub-housing part, in particular a component of the second camera, relative to a component present at the main housing part, in particular relative to a component of the first camera, at a predefined tolerance; and
- connecting the sub-housing part to the main housing part.

Such a method enables the production of camera systems having at least two lenses (also known as 2+ lens systems). These systems include a trifocal camera system which is divided into 3 lenses each with a different FOV (Field of View). This expanding functionality of the system enables the coverage of a broader range of the area observed by the camera system.

Using such a method the camera system can be produced with a predefined tolerance between two cameras of up to less than 0.05°, preferably less than 0.005° with respect to a rotation around the X-axis, i.e. a rotation around the optical axis, less than -0.011 °, preferably less than -0.0011 ° with respect to a rotation around the Y-axis, i.e. the pitch angle, and less than -0.19°, preferably less than -0.019° with respect to a rotation around the Z-axis, i.e. the yaw angle. This enables the use of a graphical algorithm. Such algorithms have been tried and tested work reliably and ensure the correct recognition of possible hazards. Thereby the minimum predefined tolerance of less than 0.05° along the x-axis between the first and second camera can easily be achieved.

Moreover, producing a camera system enables the system to be tailored to specific fields of view that can be specified by a specific customer. For example, for electric vehicles that do not have high top speeds a customer may prefer a good recognition in the near and medium field of view, whereas a manufacturer of a sports car may prefer a good recognition in the medium and far field of view, in order to detect obstacles at a long distance at the high speeds the sports car is capable of driving.

By aligning the first and second cameras already mounted in respective frames, the desired tolerance can be achieved, as manufacturing tolerances of the housing do not influence the tolerance of the alignment between the cameras, since the completed cameras are aligned relative to one another following their mounting in the respective housing part.

Preferably each of the at least two cameras is adapted to detect different fields of view, with the fields of view preferably only overlapping in boundary regions.

In this connection the boundary region is defined as the region in which the fields of view of the respective cameras overlap and in which software adapted to detect objects may detect one object as being two objects if the predefined tolerance is not maintained.

Advantageously the step of aligning a component of the sub-housing part relative to a component present at the main housing part is carried out by aligning an imager of the second camera relative to an imager of the first camera.

Alternatively it can be advantageous if the step of aligning a component of the sub-housing part relative to a component present at the main housing part is carried out by aligning a lens of the second camera relative to a lens of the first camera.

Using either an imager to imager alignment or a lens to lens alignment one can reliably ensure that the desired predefined tolerance is achieved.

Preferably the step of arranging the sub-housing part at the main housing part includes the mounting of the sub-housing part in a reception space of the main housing part and the provision of a bonding agent between the main housing part and the sub-housing part in the region of the reception space.

Providing a bonding agent leads to a good connection between the sub-housing part and the main housing part. Moreover, on the appropriate selection of the bonding agent, e.g. the bonding agent DELO OB787, a bonding agent having a thermal coefficient of expansion that is similar to that of the aluminum used for the sub-housing part and the main housing part can be employed. This ensures that the bond expands and retracts in the same way as the housing parts. Thereby less fatigue cracks arise in the connection between the parts and the lifetime thereof is increased. Moreover, such bonding agents only become hard on curing so a relative alignment between the sub-housing part and the main housing part is still possible.

Advantageously the step of aligning the sub-housing part and the main housing part relative to one another includes the selection of a component present at the main housing part, such as a component of the first camera, as a first point of reference and aligning a selected second point of reference at the sub-housing part, such as a part of the sub-housing part, relative thereto at the predefined tolerance; and/or wherein the predefined tolerance is a rotation of less than 0.05°, preferably of less than 0.05° and in particular of less than 0.005° along the x-axis between the first and second camera or the first and second point of reference respectively.

Selecting appropriate components for the relative alignment ensures that the desired pre-defined tolerance can be achieved between the images of the cameras.

It is preferred if the step of connecting the sub-housing part to the main housing part includes a bonding step in which the sub-housing part is adhesively bonded to the main housing part, in particular by curing the bonding agent present in the region of the reception space.

Bonding components to one another is a cheap and reliable way of ensuring a good connection between components. Moreover, such a bonding step allows the preliminary alignment of components relative to one another prior to being fixed in their final position.

Advantageously the bonding steps includes UVA pre-curing with recommended irradiation time for a period of 15 seconds and in particular minimum irradiation time of 9 seconds at UVA intensity of 55-60mW/cm². Next step usually is thermal curing that takes place at a temperature selected in the range of 80°C to150°C for a period of about 10 minutes to 60 minutes.

It is preferred if each of the at least two cameras respectively comprises an imager mounted on a printed circuit board and a lens, wherein the first and second cameras are respectively mounted in the main housing part or in the sub-housing part using an alignment machine that respectively aligns the lens of a camera with the imager of said camera.

These constitute the basic components of a camera system that is known to work reliably.

It is further preferred if the respective printed circuit board includes the respective imager and is mounted in the main housing part or in the sub-housing part, preferably by means of a press-fit, prior to the lens of the camera being aligned relative to the imager of said camera.

Including the imager in the printed circuit board means that the position of this is predefined prior to an assembly to a camera. The camera is completed by aligning the lens relative to the imager once the printed circuit board including the imager is attached in the respective housing part. This ensures that the respective component tolerances are maintained and thereby the safety of the system.

Various solutions for mounting the PCBs on the housing can be used as this will not be deciding for the final tolerance. A preferred connection that is used is a press-fit connection.

The technology described herein assumes two main steps in the lens adjustment process:
A single lens to imager alignment is carried out. The lens movement during alignment is possible due to the presence of glue. Once cured, the glue is hard and mechanically and thermally stable. Each camera is respectively aligned at a part of the housing using the same process, the same equipment and technology.

In order to align two cameras that have to be aligned within a predefined tolerance and which are arranged within different housing parts the same glue is applied between the housings.

The lens housings, i.e. the main housing part and the sub-housing part, are the main mechanical structure and are bonded between each other by adhesive with metal like coefficient of thermal expansion (CTE) properties. This allows for a very small distortion between camera systems having at least two lenses once the complete assembly has been aligned using a type of high precision 5 axis alignment system.

Preferably the further cameras can be mounted in the main housing part or in the sub-housing part before or after the step of mounting the sub-housing part at the main-housing part, with the further cameras also being mounted using an alignment machine that respectively aligns the lens of a camera with the imager of said camera being arranged in the printed circuit board.

These versatile design possibilities enable a camera system to include a respective camera for any kind of field of view desired.

In an advantageous embodiment three cameras are provided, with the third camera being installed in the main housing part between the first and second cameras using an alignment machine, with the housing comprising the main housing part and the sub-housing part.

Such a camera system permits the monitoring of three different fields of view of a car moving at slow to fast speeds. A fourth camera or further cameras could also be included to cover further fields of view.

In a further aspect the present invention relates to a multiple view camera system in accordance with claim 6.

The multiple view camera system can be adapted in line with the method steps of the associated method of manufacture of the camera system

The multiple view camera system in accordance with the invention comprises:
at least two cameras, a housing having a main housing part and a sub-housing part, wherein a first camera is installed in the main housing part and a second camera is installed in the sub-housing part, wherein the main housing part and the sub-housing part are bonded to one another with a component present at the main housing part being aligned relative to a component present at the sub-housing part.

Advantageously each of the at least two cameras is adapted to detect different fields of view, with the fields of view, preferably only, overlapping in boundary regions thereof. Thereby a camera system can be obtained which works reliably for a wide field of view.

By mounting the cameras in different parts of the housing and then aligning the cameras relative to one another, manufacturing tolerances can be achieved that enable the multiple view camera system to work reliably for different fields of view and in particular in the boundary regions of the cameras covering the different fields of view.

Advantageously the predefined tolerance is a rotation of less than 0.05°, preferably less than 0.005° along the x-axis between the first and second cameras.

It is preferred if three cameras are provided that they detect respective fields of view, with the third camera being provided between the first and second cameras.

The fields of view can be either completely different, partially different or at least substantially overlapping.

Advantageously the three cameras are spaced apart at at least substantially equal spacings. This enables a uniform shape of housing to be used.

In a preferred embodiment each camera comprises an imager mounted on a printed circuit board and a lens cooperating with the respective imager. The cameras advantageously cover different fields of view that are defined by respective angular apertures of the lens as seen from the focal point of the imager installed in the printed circuit board.

The angular aperture defines the opening angle of the lens and hence the viewing field that can be observed by a camera.

Preferably each of the printed circuit boards of the camera system is arranged at the same side of the main housing part and/or of the sub-housing part. This allows the cameras to be mounted within the same plane.

Advantageously the respective printed circuit board of rectangular base shape is mounted at the main housing part or at the sub-housing part by means of a press-fit. A press fit is a cheap, easy to realize and reliable form of connection. Others are possible such as a screwed connection.

The heart of the camera system is an optical system. The optical system comprises a plurality of cameras. Each camera has a lens and a PCB with an imager. In order to meet the high precision lens-to-lens or imager-to-imager requirement which is striven for by a graphical algorithm, the camera systems described herein could be used in either stereo, triple or multiplication vision systems. The camera system is characterized by very small relative imager-to-imager tolerances which are so critical in multiple lens system.

Advantageously the first camera is configured to detect a medium field of view, i.e. to detect objects at intermediate distances, preferably with an angular aperture of less than 60°, in particular of less than 52°, but greater than 30° especially with an angular aperture of at least substantially 52°; wherein the second camera is configured to detect a narrow field of view, i.e. objects at long distances, preferably with an angular aperture of less than 30°, but greater than 10°, especially of 28°; and wherein the third camera is configured to detect a wide field of view, i.e. to detect objects at short distances, preferably with an angular aperture of greater than 52°, in particular of greater than 60°, but less than 180° especially of 150°.

Such fields of view permit the detection of moving or stationary objects in the near viewing field, an intermediate viewing field and the far viewing field.

Preferably the main housing part and/or the sub-housing part each have at least one collar for the reception of the respective lens, wherein the respective lens is, preferably fixedly, connected to the collar, with the collars being arranged in a first plane at a side of the housing, the first plane being disposed at a side of the housing remote from a second plane, with the printed circuit boards being arranged in the second plane.

Preferably each collar is of at least substantially circular shape in a cross-section thereof and projects from a surface of the main housing part and/or of the sub-housing part.

A collar is simple to manufacture, particularly if it is of circular shape. The collar can accommodate the lens and can be connected thereto. The connection of the lens to the collar can, for example be achieved by means of an adhesive provided in the region of the collar, such as on a flange of the collar.

Advantageously the main housing part comprises a body, the body being of at least substantially rectangular shape in a cross-section thereof, with the collars being mounted at the body of the main housing part, and the body having two arms projecting from a side of the frame. Such shapes are simple to manufacture and can be reproduced in an automated fashion.

Moreover, the two arms can be configured to receive the sub-housing part, with a surface of the sub-housing part being in contact with a side of the two arms and with the collar of the sub-housing part being received in a region spanned between the two arms, such that the housing has an at least substantially rectangular basic shape in a cross-section thereof.

The arms thus provide a connection means for connection of the main housing part to the sub-housing part. In addition to this the arms also make available a space in which the collar of the sub-housing part can be received.

Advantageously the multiple view camera system, further comprises at least one housing cover mount for the reception of a housing cover, the at least one housing cover mount being provided at at least one of the main housing part and the sub-housing part; and the multiple view camera system optionally further comprises a housing cover mounted at the at least one housing cover mount, the housing cover comprising at least one interface.

In this way the housing can be provided with a housing cover in a simple manner. Moreover, the connection of the housing cover takes place via the main housing part and/or the sub-housing part. The provision of an interface in the housing cover enables the transmission of signals received from the cameras in order to have these forwarded to further components, such as a display, an evaluation unit, a control unit etc.

Preferably the sub-housing part comprises a main body and the collar, with the collar projecting from the main body, wherein the main body of the sub-housing part is fixedly connected to the arms of the main housing part.

Providing a main body advantageously allows at least one camera to be mounted with its lens and imager being aligned to the best possible degree and at the same time permits a solid connection of the sub-housing part to the main housing part.

Advantageously at least one of the main housing part and the sub-housing part has a projection at its side facing the printed circuit boards, wherein the printed circuit boards are respectively connected to the main housing part and the sub-housing part via the projection.

Further embodiments of the invention are described in the following description of the Figures. The invention will be explained in the following in detail by means of embodiments and with reference to the drawing in which is shown:
- Fig. 1: a perspective view of a multiple view camera system;
- Fig. 2: a perspective view of a further multiple view camera system;
- Fig. 3: a partial section through the further multiple view camera system of Fig. 2;
- Fig. 4: a section through the camera system of Fig. 2;
- Fig. 5: a side view on the camera system of Fig. 2;
- Fig. 6: a view from below on the camera system of Fig. 2;
- Fig. 7: a view of the sub-housing part of the camera system of Fig. 2; and
- Fig. 8: an end view on the camera system of Fig. 2 showing a sub-housing part.

In the following the same reference numerals will be used to denote parts having the same or equivalent function. When geometric expressions, such as top, bottom, or side are used, these are to be understood in the context of the Figure to which they refer and not as a limitation to the arrangement of the part.

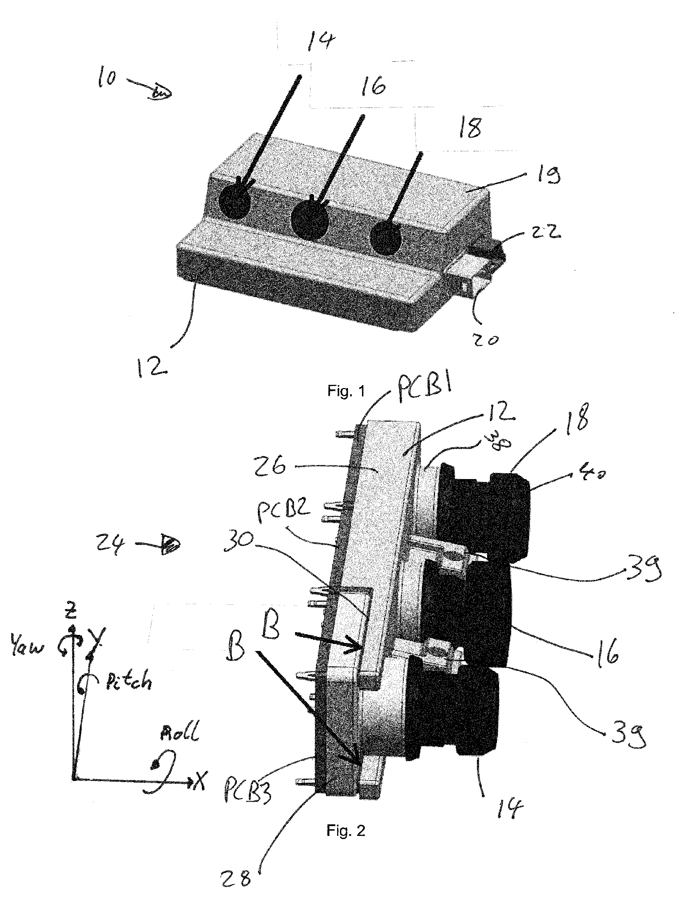

Fig. 1 shows a perspective view onto a first multiple view camera system 10. Such camera systems 10 are typically installed as high as possible in a vehicle usually in the region of a rear view mirror of a vehicle in order to warn/assist the driver of/in possible hazardous situations. The camera system 10 comprises a housing 12, three cameras 14, 16, 18 and two interfaces 20, 22. The interfaces 20, 22 are connected to an onboard data processing center of a vehicle (both not shown).

The data processing center is configured to process the images taken by the three cameras 14, 16, 18 in real time using appropriately designed software. The software scans the images taken by the cameras 14, 16, 18 using e.g. pattern recognition algorithms in order to determine whether objects are present in the field of view of the camera 14, 16, 18 and whether the distance between the objects and the moving vehicle changes. If e.g. the spacing between the object and the vehicle reduces to a critical amount at a given speed of the vehicle, the onboard data processing center outputs at least a warning signal and/or can initiate an emergency brake or the like.

In this example, the three cameras 14, 16, 18 installed in the camera system 10 are respectively configured to monitor different fields of view. The right hand camera 18 is adapted to monitor a field of view comparable to that or identical to that monitored by known single lens camera systems.

The middle camera 16 is adapted to monitor a wide field of view, this means that it is configured to detect e.g. pedestrians crossing a road in front of the vehicle or bicycles riding in front or at a side of a vehicle driving at slow or moderate speeds. Using appropriate software the images taken by the middle camera 16 can also be monitored to see whether a vehicle is travelling within pre-defined road markings and if the vehicle leaves the pre-defined track to initiate a warning signal and/or other measures.

The left hand camera 14 is adapted to monitor a narrow field of view, this means that the camera 14 takes images at long distances, this is particularly helpful when the vehicle is travelling at intermediate to high speeds, e.g. on highways or motorways, in order to detect stationary or slow vehicles at a long distance. If stationary or slow moving objects are detected then the onboard data processing center is configured to output a warning signal and/or initiate further measures.

In all of the examples shown in the exemplary embodiments, the middle camera 16 is always the camera that is adapted to monitor a wide field of view. However, this does not necessarily have to be the case, the wide field of view camera could be installed at a different position.

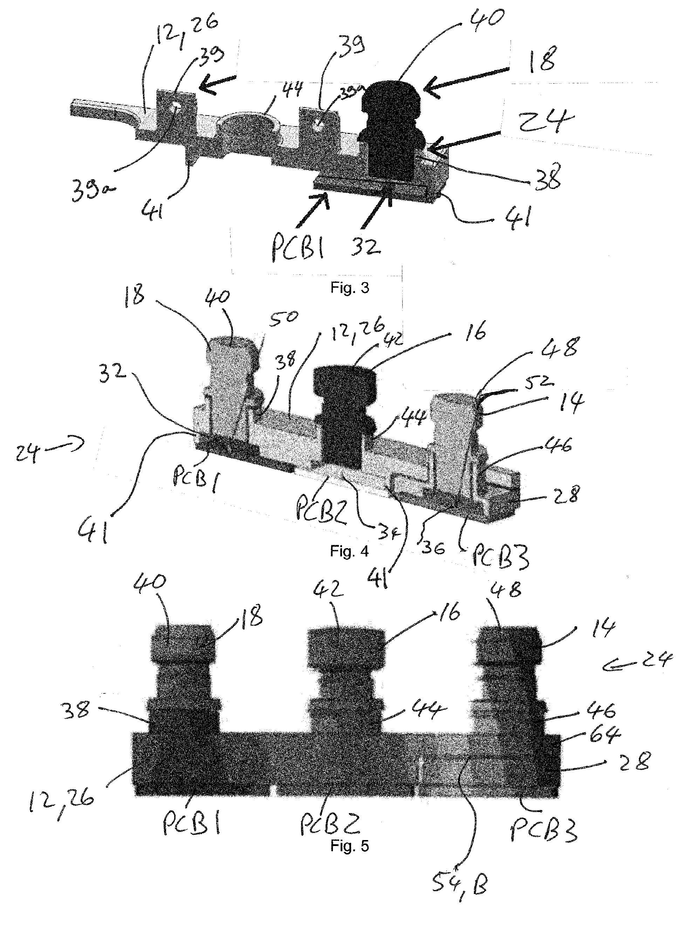

The cameras 14, 16, 18 are covered by a housing cover 19 in such a way that at least substantially only their respective lenses 40, 42, 48 (see Fig. 5) are not covered by the housing cover 19. The housing cover 19 can be connected to the housing 12 by means of e.g. a screwed connection (not shown). It should however be noted that also different types of connection can be used in order to effect the connection between the housing 12 and the housing cover 19.

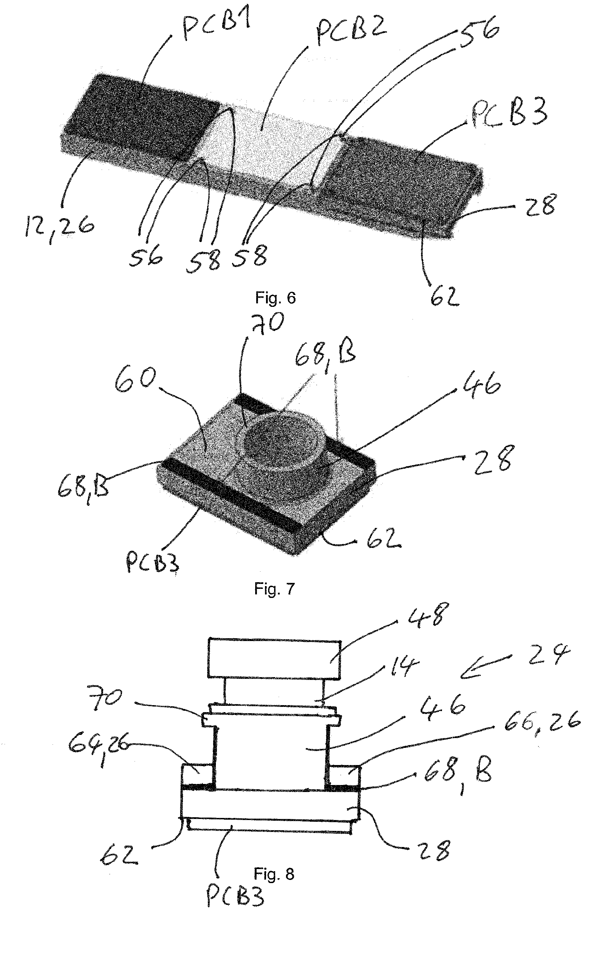

Fig. 2 shows a further kind of multiple view camera system 24. In the example shown in Fig. 2 the housing 12 comprises a two part housing 12 having a main housing part 26 and a sub-housing part 28. The sub housing part 28 is arranged in a reception space 30 of the main housing part 26. On assembly of the camera system 24 a printed circuit board PCB1 having an imager 32 of the first camera 18 (see Fig. 3), i.e. of the right hand camera, is mounted in the main housing part 26 by means of a press fit connection (see Fig. 6). Thereafter a bonding agent (not shown) is provided within a first collar 38 of the main housing part 26 and a lens 40 is inserted into the first collar 38.

The lens 40 is subsequently aligned in the first collar 38 using a 5 axis alignment machine of very high precision (not shown). Such alignment systems are described by way of example e.g. in WO 2013/155403 A1 whose contents is hereby incorporated by reference having regard to the alignment of the lens 40 with respect to the imager 32 of a camera 18. Once the predefined tolerance of alignment has been reached the bonding agent present in the first collar 38 is cured in order to fix the lens 40 relative to the imager 32.

The housing 12 of Fig. 2 can be arranged in a cover 19 (see e.g. Fig. 1). The main housing part 26 has two mounts 39 for the housing cover 19 for this purpose. Fig. 3 shows that the mounts 39 are arranged between the collars 38, 44 provided for the reception of lenses 40, 42 at the main housing part.

The mounts 39 have an at least substantially rectangular shape in at least one cross-section thereof. Apertures 39a are provided in the mounts 39 in order to connect the housing cover 19 to the main housing part 26.

The housing 12, comprising the main housing part 26 and the sub-housing part 12 is of at least substantially rectangular shape in a cross-section thereof. This means that the shapes of the sub-housing part 28 and the main housing part 26 are selected such that when connected to one another they form a generally rectangular shape.

Fig. 3 shows a part section through the main housing part 26 of the camera system 24. The first camera 18 is mounted in the first collar 38. A second collar 44 is provided for the reception of the third camera 16.

The main housing part comprises a rectangular body with arms 64, 66 (see Fig. 8) projecting from the body. The body is made of a suitable material, such as Aluminium. The part section of Fig. 3 shows that the collars 38, 44 in principle are through going apertures of circular shape that permit the respective lens 40, 42, 48 of a camera 14 16, 18 to cooperate with its imager. The lenses 40, 42, 48 are arranged in a first plane at a side of the housing. Likewise the printed circuit boards PCB1, PCB2, PCB3 are arranged in a second plane at a second side of the housing 12 in parallel with the first plane. This enables a compact design of the camera system 24.

In order to mount the lens 42 of the third camera 16 in the second collar 44 of the main housing part 26 a similar procedure is carried out with regard to the first camera 18.

The main housing part 12 has a projection 41 at a side thereof. The projection 41 forms a boundary at a side of the main housing part 26. The printed circuit boards PCB1, PCB2 are mounted in the region of the projection 41. Sealing means (not shown) can be provided in the region of the projection 41 in order to seal between the printed circuit boards PCB1, PCB2 and the projection 41 so that the imagers mounted on the printed circuit boards only receive light from the lenses. Moreover, the printed circuit boards PCB1, PCB2 can be mounted at the housing via the projection 41. An exemplary connection that is used is a press-fit connection shown in the following in connection with Fig. 6.

Fig. 4 shows a section through the housing of Fig. 2. The sub-housing part 28 has a third collar 46 in which a lens 48 of the second camera 14 is mounted. The second camera 14 is mounted in the third collar 46 in the same way as the lenses 40, 42 of the first and the third cameras 18, 16 are mounted in the collars 38, 44 of the main housing part 26. Each of the cameras 14, 16, 18 has a printed circuit board PCB3, PCB2, PCB1, an imager 36, 34, 32 and a lens 48, 42, 40 mounted relative thereto.

In order to avoid signal distortions between the boundary of the fields of view of the first and second cameras 18, 14, these have to be mounted at a predefined tolerance that is not allowed to exceed 0.05° with respect to a rotation along their x-axes. This is achieved by arranging the sub-housing part in the reception space of the main housing part, with a bonding agent B being present between the main housing part 26 and the sub-housing part 28 in the region of the reception space 30.

In order to align the sub-housing part 28 and the main housing part 26 relative to one another, the main housing part 26 is positioned within a holding device (not shown) and the sub-housing part is arranged in a gripping device (also not shown) that can be moved relative to the holding device. Then a first point of reference 50 is selected at the main housing part 26. In the present example this is the imager 32 of the first camera 18 present at the printed circuit board PCB1. Thereafter a second point of reference 52 is selected at the printed circuit board PCB3 of the second camera 14 installed in the sub-housing part 28. In the present example this is the imager 36 of the second camera 14 present at the printed circuit board PCB3 of the second camera 14. During the alignment process the sub-housing part 28 is moved relative to the main housing 26 part by means of a controlled driver attached to the gripping device (also not shown). In order to effect this relative movement the first point of reference 50 and the second point of reference 52 are aligning relative to one another using suitable probes, so as to align the first and second cameras 18, 14 at a predefined tolerance. The predefined tolerance is a rotation of less than 0.005° along the x-axis between the first and second camera 18, 14.

Once the first and second cameras 18, 14 have been aligned the sub-housing part 28 is connected to the main housing part 26 by curing the bonding agent provided in the region of the reception space 30.

Advantageously the bonding steps includes UVA pre-curing with recommended irradiation time for a period of 15 seconds and in particular minimum irradiation time of 9 seconds at UVA intensity of 55-60mW/cm². Next step usually is thermal curing, that takes place at a temperature selected in the range of about 80°C to150°C for a period of 10 minutes to 60 minutes.

In order to align the first and second cameras 18, 14 various first and second points of reference 50, 52 can be selected. For example:
the imager 32 of the first camera 18 can be selected as a first point of reference 50 and the collar 46 of the sub-housing part 28 can be selected as the second point of reference 52,
the printed circuit board PCB1 and/or a contact (not shown) present at the printed circuit board PCB1 of the first camera 18 can be selected as a first point of reference 50 and the collar 46 of the sub-housing part 28 can be selected as the second point of reference 52;
the imager 32 of the first camera 18 can be selected as a first point of reference 50 and the printed circuit board PCB3 and/or a contact (not shown) present at the printed circuit board PCB3 of the second camera 14 can be selected as the second point of reference 52;
the imager 32 of the first camera 18 can be selected as the first point of reference 50 and the imager 36 of the second camera 14 can be selected as the second point of reference 52;
the lens 40 of the first camera 18 can be selected as the first point of reference 50 and lens 48 of the second camera 14 can be selected as the second point of reference 52.

The different kinds of probes that can be used are:
- imager optically active zone edge,
- center point,
- symmetry plane.

A surface of the projection 41 a of the main housing part 12 is arranged generally in parallel with a surface of the collars 38, 44. In addition to this as is shown in Fig. 4 the printed circuit boards PCB1, PCB2 present at the main housing part 26 are also oriented in a plane with the printed circuit board PCB3. The collar 46 of the sub-housing part 28 is likewise oriented in a plane with the collars 38, 44 present at the main housing part. The cameras 14, 16, 18 are all disposed in a row.

Fig. 5 shows a side view of camera system 24 of Fig. 2. A bead 54 is present in the region of the reception space 30, the bead 54 is an exemplary illustration of the bonding agent B used to attach the sub-housing part 28 to the main housing part 26. In the current example the bonding agent B is the only kind of connection used between the sub-housing part 28 and the main housing part 26.

Fig. 6 shows a view from below of the camera system 24 of Fig. 2. Each printed circuit board of the cameras PCB1, PCB2, PCB3 is connected to the main housing part 26 or the sub-housing part 28 using a press-fit in the embodiment shown. In order to affect the press fit, elastically deformable noses 56 are provided at the main housing part 26 and at the sub-housing part 28. The elastically deformable noses 56 are adapted to cooperate with cutouts 58 provided in the three printed circuit boards PCB1, PCB2, PCB3 that are to be attached to the main housing part 28 and to the sub-housing part 26. Other kinds of connection that can be used are a screwed connection, an adhesively bonded connection etc.

Fig. 7 shows a view of the sub-housing part 28 of the camera system 24 of Fig. 2. The sub-housing part 28 comprises a main body 60 and the collar 46. The printed circuit board PCB3 is received at a bottom side 62 of the main body 60 and the imager 36 of the camera 14 is positioned in the region of the collar 46. On installation of the camera lens 48, the lens 48 is aligned with the imager 36 in a manner that is well known.

Fig. 8 shows an end view on the camera system 24 of Fig. 2 showing the sub-housing part 28. Two arms 64, 66 project from the main housing part 26 (see Fig. 2) and a lower side of the arms 64, 66 respectively acts as part of the reception space 30 for the reception of the sub-housing part 28 of the main housing part 26. The arms 64, 66 project past the collar 46 of the sub-housing part 28. On assembly to a camera system 24 the bonding agent B is positioned either on the sub-housing part 28 in the form of strips 68 (see Fig. 7) or can be provided at the bottom side of the arms 64, 66 of the main housing part 26.

The main housing part comprises a body, the body being of at least substantially rectangular shape in a cross-section thereof. Advantageously the two arms 64, 66 are arranged at the body of the main housing part 26 (see also Fig. 5) at a height such that the bottom side 62 of the sub-housing part 28 is arranged flush with a bottom side of the main housing part 26 such that the printed circuit boards PCB1, PCB2, PCB3 can be arranged in one plane. A surface of the sub-housing part 28 is in contact with a side of the two arms 64, 66. Moreover, the collar 46 of the sub-housing part 28 is received in a region spanned between the two arms 64, 66.

In order to align any of the lenses 40, 42, 48 shown in the Figs. relative to the imager 32, 34, 36, the adhesive can be applied either within the respective collar 38, 44, 46 or on a flange 70 of the respective collar 46 (see Fig. 8).

### List of reference numerals:

- 10: camera system
- 12: housing
- 14: camera
- 16: camera
- 18: camera
- 19: housing cover
- 20: interface
- 22: interface
- 24: camera system
- 26: main housing part
- 28: sub housing part
- 30: reception space
- 32: imager
- 34: imager
- 36: imager
- 38: collar
- 39: mount for a housing cover
- 39a: aperture
- 40: lens
- 41: projection
- 42: lens
- 44: collar
- 46: collar
- 48: lens
- 50: point of reference
- 52: point of reference
- 54: bead
- 56: nose
- 58: cut-out
- 60: main body
- 62: bottom side
- 64: arm
- 66: arm
- 68: strip of bonding agent
- 70: flange

- PCB 1: printed circuit board
- PCB 2: printed circuit board
- PCB 3: printed circuit board
- B: bonding agent

## Claims

1. A method of manufacturing a multiple view camera system (10; 24) comprising at least two cameras (14, 16, 18) installed in a housing (12; 26, 28), the method comprising the steps of:
- providing a main housing part (26) and mounting a first camera (18) in the main housing part (26);
- providing a sub-housing part (28) and mounting a second camera (14) in the sub-housing part (28);
- arranging the sub-housing part (28) at the main housing part (26);
- aligning a component (36, 48) present at the sub-housing part (28), in particular a component of the second camera, relative to a component (32, 40) present at the main housing part (26), in particular relative to a component of the first camera, at a predefined tolerance; and
- connecting the sub-housing part (28) to the main housing part (26).

2. A method in accordance with claim 1, wherein the step of aligning a component of the sub-housing part (28) relative to a component present at the main housing part (26) is either carried out by aligning an imager (36) of the second camera (14) relative to an imager (32) of the first camera (18) or by aligning a lens (48) of the second camera (14) relative to a lens (40) of the first camera (18).

3. A method in accordance with claim 1 or claim 2, wherein the step of arranging the sub-housing part (28) at the main housing part (26) includes the mounting of the sub-housing part (28) in a reception space (30) of the main housing part (26) and the provision of a bonding agent (B) between the main housing part (26) and the sub-housing part (28) in the region of the reception space (30); and/or wherein the predefined tolerance is a rotation of less than 0.05° along the x-axis between the first and second camera (18, 14) or the first and second point of reference (50, 52) respectively.

4. A method in accordance with any one of the preceding claims, wherein each of the at least two cameras (18, 16, 14) respectively comprises an imager (32, 34, 36) mounted on a printed circuit board (PCB1, PCB2, PCB3), and a lens (40, 42, 48), wherein the respective printed circuit board (PCB1, PCB2, PCB3) is mounted in the main housing part (26) or in the sub-housing part (28), preferably by means of a press-fit, prior to the lens of the camera being aligned relative to the imager of said camera.

5. A method in accordance with any one of the preceding claims, wherein at least one further camera (16) is mounted in the main housing part (26) or in the sub-housing part (28) before or after the step of mounting the sub-housing part (28) at the main-housing part (26), with the at least one further camera (16) also being mounted using an alignment machine that respectively aligns the lens of the at least one further camera with the imager of said camera.

6. A multiple view camera system (10; 24), in particular manufactured by a method in accordance with any one of the preceding claims, the multiple view camera system comprising at least two cameras (14, 16, 18), a housing (12) having a main housing part (26) and a sub-housing part (28), wherein a first camera (18) is installed in the main housing part (26) and a second camera (14) is installed in the sub-housing part (28), wherein the main housing part (26) and the sub-housing part (28) are bonded to one another with a component (32, 40) present at the main housing part (26) being aligned relative to a component (36, 48) present at the sub-housing part (28).

7. A multiple view camera system (10; 24) in accordance with claim 6, wherein three cameras (14, 16, 18) are provided that detect respective fields of view, with the third camera (16) being provided between the first and second cameras (18, 14) and/or wherein, when the three cameras (14, 16, 18) are provided the three cameras (14, 16, 18) are spaced apart at at least substantially equal spacings.

8. A multiple view camera system (10; 24) in accordance with claim 6 or claim 7, wherein each camera (18, 16, 14) comprises an imager (32, 34, 36) mounted on a printed circuit board (PCB1, PCB2, PCB3) and a lens (40, 42, 48) cooperating with the respective imager, wherein each of the printed circuit boards (PCB1, PCB2, PCB3) are arranged at the same side of the main housing part (26) and/or of the sub-housing part (28).

9. A multiple view camera system (10; 24) in accordance with claim 8, wherein the respective printed circuit board (PCB1, PCB2, PCB3) of rectangular base shape is mounted at the main housing part (26) or at the sub-housing part (28) by means of a press-fit.

10. A multiple view camera system (10; 24) in accordance with claim 8 or claim 9, wherein the main housing part (26) and/or the sub-housing part (28) each have at least one collar (38, 44, 46) for the reception of the respective lens (40, 42, 48), wherein the respective lens (40, 42, 48) is connected to the collar (38, 44, 46), with the collars (38, 44, 46) being arranged in a first plane at a side of the housing (12), the first plane being disposed at a side of the housing (12) remote from a second plane, with the printed circuit boards (PCB1, PCB2, PCB3) being arranged in the second plane.

11. A multiple view camera system (10; 24) in accordance with claim 10, wherein each collar (38, 44, 46) is of at least substantially circular shape in a cross-section thereof and projects from a surface of the main housing part (26) and/or of the sub-housing part (28).

12. A multiple view camera system (10; 24) in accordance with claim 10 or claim 11, wherein the main housing part (26) comprises a body, the body being of at least substantially rectangular shape in a cross-section thereof, with the collars (38, 44) being mounted at the body of the main housing part (26), and the body having two arms (64, 66) projecting from a side of the frame,
wherein the two arms (64, 66) are configured to receive the sub-housing part (28), with a surface of the sub-housing part (28) being in contact with a side of the two arms (64, 66) and with the collar (46) of the sub-housing part (28) being received in a region spanned between the two arms (64, 66) such that the housing (12) has an at least substantially rectangular basic shape in a cross-section thereof.

13. A multiple view camera system (10; 24) in accordance with claim 12, further comprising at least one housing cover mount (39) for the reception of a housing cover (19), the at least one housing cover mount (39) being provided at at least one of the main housing part (26) and the sub-housing part (28); and the multiple view camera system (10; 24) optionally further comprising a housing cover (19) mounted at the at least one housing cover mount (39), the housing cover (19) comprising at least one interface (20, 22).

14. A multiple view camera system (10; 24) in accordance with any one of claims 7 to 9, wherein the sub-housing part comprises a main body (60) and a collar (46), with the collar (46) projecting from the main body (60), wherein the main body (60) of the sub-housing part (28) is fixedly connected to the arms (64, 66) of the main housing part (26).

15. A multiple view camera system (10; 24) in accordance with claim 13 or claim 14, wherein at least one of the main housing part (26) and the sub-housing part (28) has a projection (41) at its side facing the printed circuit boards (PCB1, PCB2, PCB3), wherein the printed circuit boards (PCB1, PCB2, PCB3) are respectively connected to the main housing part (26) and the sub-housing part (28) via the projection (41).
